# EUROPEAN PATENT APPLICATION

(11) **EP 4 138 180 A1**
(43) Date of publication of application: **22.02.2023**
(21) Application number: 21807919.2
(22) Date of filing: 20.04.2021
(51) Int. Cl.: H01M 50/10, H01M 50/50, H01M 50/20

(54) **BATTERY CELL ASSEMBLY, BATTERY, BATTERY PACK, AND AUTOMOBILE**

(30) Priority: 18.05.2020 CN 202010422007
(71) Applicant: BYD Company Limited, Shenzhen, Guangdong 518118 (CN)
(72) Inventor: HU, Shichao, Shenzhen, Guangdong 518118 (CN); ZHU, Yan, Shenzhen, Guangdong 518118 (CN)
(74) Representative: Hoffmann Eitle
(86) International application number: PCT/CN2021/088455
(87) International publication number: WO 2021/233043

(57) **Abstract**

The present disclosure provides a battery core assembly (10), a battery (100), a battery pack (200), and a vehicle (300). The battery core assembly includes an encapsulation film (11) and an electrode core assembly (12) encapsulated in the encapsulation film. The electrode core assembly includes an electrode core assembly body (123) and two electrode lead-out members (122) of opposite polarities electrically connected to the electrode core assembly body. The electrode core assembly body includes at least two electrode cores (121) connected in parallel. Each of the electrode cores includes an electrode core body (1211) and two tabs (1213) of opposite polarities that are electrically connected to the electrode core body. The electrode core assembly body further includes a tab support (124). The two electrode lead-out members are respectively electrically connected to one of the tab supports located two sides of the electrode core assembly body in a first direction. Moreover, the present disclosure further provides a battery, a battery pack, and a vehicle.

## Description

### CROSS-REFERENCE TO RELATED APPLICATIONS

The present disclosure is proposed on the basis of and claims priority to Chinese Patent Application No. 202010422007.8 filed on May 18, 2020, the disclosure of which is incorporated herein by reference in its entirety.

### FIELD

The present disclosure relates to the field of batteries, and specifically to a battery core assembly, a battery, a battery pack, and a vehicle.

### BACKGROUND

With the continuous popularization of new energy vehicles, the requirements raised for use of power batteries in new energy vehicles are becoming increasingly higher. In particular, the users' requirements for the service life of power batteries becomes increasingly higher. Especially taxi, and buses are required to have a service life of more than 1 million kilometers over 5 years. For the sake of enhancing the capacity, multiple electrically connected and stacked electrode cores are usually provided in existing batteries. However, the electrode cores are usually directly connected through the tabs. In the welding process, the tabs are easily caused to deform, or the tabs of the electrode core tend to deform due to vibration or impact during use of the battery, affecting the service life of the battery.

### SUMMARY

The present disclosure is intended to resolve at least one of the technical problems existing in the related art.

To resolve the foregoing technical problem, the technical solutions of the present disclosure are as follows.

In a first aspect, the present disclosure provides a battery core assembly, which includes an encapsulation film and an electrode core assembly encapsulated in the encapsulation film. The electrode core assembly includes an electrode core assembly body and two electrode lead-out members of opposite polarities electrically connected to the electrode core assembly body. The electrode core assembly body includes at least two electrode cores connected in parallel, where
the length of the electrode core extends along a first direction, and the thickness of the electrode core extends along a second direction. The at least two electrode cores are arranged in sequence along the second direction, and each of the electrode cores includes an electrode core body and two tabs of opposite polarities that are electrically connected to the electrode core body. The two tabs are respectively arranged at two opposite sides of the electrode core in the first direction.

The electrode core assembly body further includes a tab support arranged between two adjacent tabs at the same side and electrically connected to the two adjacent tabs. The two electrode lead-out members are respectively electrically connected to one of the tab supports located at two sides of the electrode core assembly body in the first direction.

In some embodiments of the present disclosure, the tab support includes two opposite first surfaces, where the two first surfaces face two adjacent tabs with the same polarity respectively, and the two adjacent tabs with the same polarity are respectively directly attached to the two first surfaces of the tab support.

In some embodiments of the present disclosure, the tab support is connected to the electrode lead-out member and the tab at positions that are respectively located on different surfaces of the tab support.

In some embodiments of the present disclosure, at least one tab support connected with the electrode lead-out member is a square piece. The square piece includes the two first surfaces, a third surface located between the two first surfaces and facing the electrode core body, and a fourth surface opposite to the third surface.

The tab support electrically connected to the electrode lead-out member is connected to the electrode lead-out member through the fourth surface.

In some embodiments of the present disclosure, at least one tab support is a U-shaped piece. The opening of the U-shaped piece is oriented parallel to the first direction, the U-shaped piece includes two opposite side walls and a bottom wall between the two opposite side walls, and the outer surfaces of the two opposite side walls are the two first surfaces respectively.

In some embodiments of the present disclosure, the opening of the U-shaped piece faces the electrode core body, and the tab support electrically connected to the electrode lead-out member is connected to the electrode lead-out member through the bottom wall.

In some embodiments of the present disclosure, the electrode core assembly is arranged in an accommodating cavity defined by the encapsulation film, and an spacer ring is further arranged in the accommodating cavity at a side of the electrode core assembly provided with the electrode lead-out member, and provided with an electrode lead-out hole for leading the electrode lead-out member out. The opening of the U-shaped piece faces the spacer ring at the same side, and the tab support electrically connected to the electrode lead-out member is connected to the electrode lead-out member through one of the side walls.

In some embodiments of the present disclosure, an insulating spacer is provided between the tab support and the electrode core body.

In some embodiments of the present disclosure, the two opposite ends of the electrode core body in the first direction are V-shaped end faces with a tip protruding outward, the two tabs of each of the electrode cores are respectively located at the tips of the two V-shaped end faces, and a V-shaped space is formed between the V-shaped end faces of two adjacent electrode core bodies at the same end in the first direction.

The insulating spacer is a V-shaped piece matching the shape of the V-shaped space, and the V-shaped piece is fitted in the V-shaped area.

In some embodiments of the present disclosure, the V angle of the V-shaped space is 90-150 degrees.

In some embodiments of the present disclosure, the insulating spacer is fixed to the tab support by snap fit.

In some embodiments of the present disclosure, the electrode core assembly is arranged in an accommodating cavity defined by the encapsulation film, and an spacer ring is further arranged in the accommodating cavity at a side of the electrode core assembly provided with the electrode lead-out member, and provided with an electrode lead-out hole for leading the electrode lead-out member out.

In some embodiments of the present disclosure, an electrolyte solution is injected in the accommodating cavity. The spacer ring is provided with at least one second liquid reservoir, where the second liquid reservoir is recessed from an outer surface of the spacer ring to the interior of the spacer ring; and the second liquid reservoir communicates with the accommodating cavity.

In some embodiments of the present disclosure, the interior of at least one tab support is a hollow cavity, and the hollow cavity is provided with an opening in at least one cavity wall, to communicate with the electrode lead-out hole on the spacer ring at the same side, such that the hollow cavity is formed into a first liquid reservoir.

In some embodiments of the present disclosure, the spacer ring has an accommodating space at the side facing the electrode core assembly body, the two spacer rings are respectively mounted around two opposite sides of the electrode core assembly body in the first direction, and the two opposite sides of the electrode core assembly body in the first direction are respectively fitted in the accommodating space of a corresponding spacer ring.

In a second aspect, the present disclosure provides a battery, which includes a casing, and multiple battery core assemblies arranged in sequence and encapsulated in the casing. The battery core assemblies are serially connected.

In a third aspect, the present disclosure provides a battery pack, which includes multiple batteries as described above.

In a fourth aspect, the present disclosure provides a vehicle, which includes a battery module or a battery pack as described above.

Compared with related art, the present disclosure has the following beneficial effects.

In the battery core assembly provided in the present disclosure, two adjacent tabs at the same side can not only be electrically connected, but also supported by the tab support, to effectively prevent the deformation of the tabs during the welding and use, and prolong the service life of the battery.

### BRIEF DESCRIPTION OF THE DRAWINGS

Fig. 1 is a schematic structural view of a battery core assembly provided in a first embodiment of the present disclosure;
Fig. 2 is a front view of the battery core assembly shown in Fig. 1;
Fig. 3 is a schematic cross-sectional view of the battery core assembly shown in Fig. 2 along III-III;
Fig. 4 is a schematic structural view of the battery core assembly shown in Fig. 1, from which an encapsulation film is removed;
Fig. 5 is a schematic structural view of the battery core assembly shown in Fig. 4, from which an spacer ring is removed;
Fig. 6 is a schematic exploded view of the battery core assembly provided in the first embodiment of the present disclosure;
Fig. 7 schematically shows the assembly of an insulating spacer, a tab support, and an electrode lead-out member;
Fig. 8 shows a disassembled structure of Fig. 7;
Fig. 9 is a schematic structural view of a tab support provided in another embodiment;
Fig. 10 is a schematic structural view of a battery core assembly provided in a second embodiment of the present disclosure;
Fig. 11 is a front view of the battery core assembly shown in Fig. 10;
Fig. 12 is a schematic cross-sectional view of the battery core assembly shown in Fig. 11 along XII-XII;
Fig. 13 is a schematic structural perspective view of an spacer ring provided in the second embodiment of the present disclosure in one direction;
Fig. 14 is a left side view of the spacer ring provided in the second embodiment of the present disclosure;
Fig. 15 is a schematic cross-sectional view of Fig. 14 along XV-XV;
Fig. 16 is a schematic structural perspective view of the spacer ring provided in the second embodiment of the present disclosure in another direction;
Fig. 17 is a schematic structural view of a battery without a casing provided in an embodiment of the present disclosure;
Fig. 18 is a schematic structural view of a battery with a casing provided in an embodiment of the present disclosure;
Fig. 19 is a schematic structural view of a battery pack provided in an embodiment of the present disclosure; and
Fig. 20 is a schematic structural view of a vehicle provided in an embodiment of the present disclosure.

Reference numerals of the accompanying drawing:
10. battery core assembly; 11. encapsulation film; 110. accommodating cavity; 12. electrode core assembly; 121. electrode core; 1211. electrode core body; 1213. tab; 122. electrode lead-out member; 1221. contact portion; 1223. lead-out portion; 123. electrode core assembly body; 124. tab support; 1240. hollow cavity; 1241. first surface; 1243. third surface; 1244. fourth surface; 1245. opening; 1247. side wall; 1248. bottom wall; 125. insulating spacer; 1246. engaging hole; 1251. buckle; 13. spacer ring; 130. opening; 131. electrode lead-out hole; 132. second liquid reservoir 1321. reinforcing rib; 1322. liquid storage unit; 133. inner cavity; 134. accommodating space; 100. battery; 200. battery pack; 22. tray; 20. casing; 300. vehicle.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present disclosure and cannot be construed as a limitation on the present disclosure.

In the description of the present disclosure, it should be understood that, terms such as "length", "width", "up", "down", "front", "rear", "left", "right", "vertical", "horizontal", "top", "bottom", "inside", and "outside" indicate an orientation or position relationship based on the orientation or position shown in the accompanying drawings. These terms are merely for the convenience of describing the present disclosure and simplifying the description, and not to indicate or imply that the device or element referred to needs to have a particular orientation, be constructed and operated in a particular orientation, and therefore cannot be understood as a limitation on the present disclosure.

In addition, the terms "first" and "second" are used merely for the purpose of description, and shall not be construed as indicating or implying relative importance or implying a number of indicated technical features. Therefore, features defining "first" and "second" may explicitly or implicitly include one or more such features. In the description of the present disclosure, "number of", "multiple", or "plurality of" means two or more, unless otherwise specifically defined.

In the present disclosure, terms such as "installation", "connected", "connection", and "fastening" shall be understood in a broad sense unless otherwise expressly specified and defined, which for example, may be fixedly connected, detachably connected, or integrally formed; may be mechanically or electrically connected; may be directly connected or indirectly connected by an intermediate medium; or may be connection between two elements or interaction between two elements. For a person of ordinary skill in the art, specific meanings of the terms in the present disclosure may be understood based on a specific situation.

The present disclosure provides a battery core assembly 10, which include an encapsulation film 11 and an electrode core assembly 12 encapsulated in the encapsulation film 11. The electrode core assembly 12 includes an electrode core assembly body 123 and two electrode lead-out members 122 of opposite polarities electrically connected to the electrode core assembly body 123. The electrode core assembly body 123 includes at least two electrode cores 121 connected in parallel, where the length of the electrode core 121 extends along a first direction L, and the thickness of the electrode core 121 extends along a second direction W. The at least two electrode cores 121 are arranged in sequence along the second direction W, and each of the electrode cores 121 includes an electrode core body 1211 and two tabs 1213 of opposite polarities that are electrically connected to the electrode core body 1211. The two tabs 1213 are respectively arranged at two opposite sides of the electrode core 121 in the first direction L. The electrode core assembly body 123 further includes a tab support 124 arranged between two adjacent tabs 1213 at the same side and electrically connected to the two adjacent tabs 1213. The two electrode lead-out members 122 are respectively electrically connected to one of the tab supports 124 located two sides of the electrode core assembly body 123 in the first direction L.

Compared with related art, the present disclosure has the following beneficial effects.

In the battery core assembly 10 provided in the present disclosure, two adjacent tabs 1213 at the same side can not only be electrically connected by the tab support 124, but also supported by the tab support 124, to effectively prevent the deformation of the tabs 1213 during the welding and use, and prolong the service life of the battery 100.

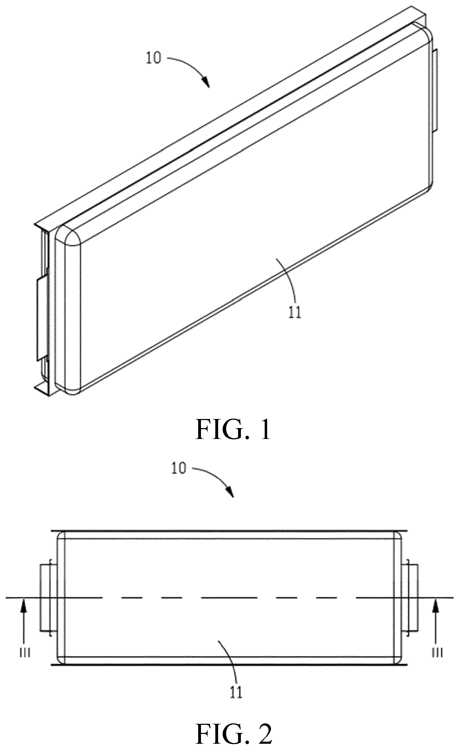

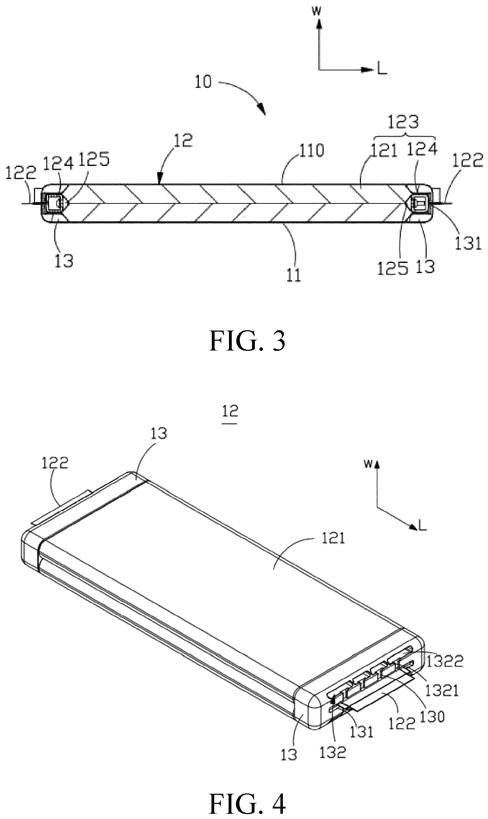

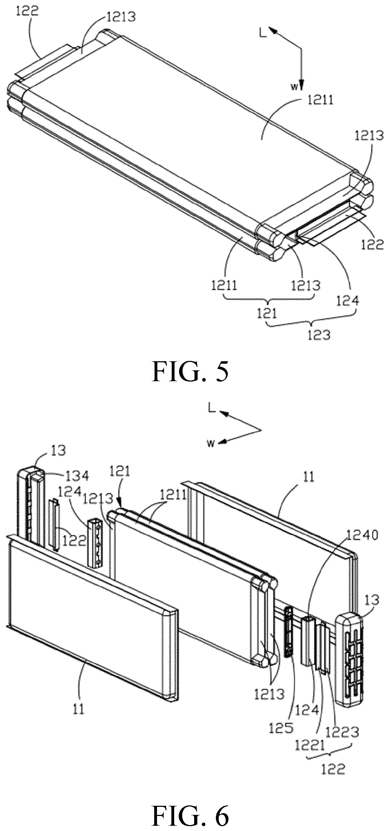

Fig. 1 is a schematic structural view of a battery core assembly 10 provided in a first embodiment of the present disclosure; Fig. 2 is a front view of the battery core assembly 10 shown in Fig. 1; and Fig. 3 is a schematic cross-sectional view of the battery core assembly 10 shown in Fig. 2 along III-III. Referring to Figs. 1, 2 and 3, the battery core assembly 10 includes an encapsulation film 11 and electrode core assembly 12. It can be understood that one or more electrode core assemblies 12 may be provided. The encapsulation film 11 defines an accommodating cavity 110, where the electrode core assembly 12 is arranged in the accommodating cavity 110. Fig. 4 is a schematic structural view of the battery core assembly shown in Fig. 1, from which the encapsulation film is removed, that is, a schematic structural view of the electrode core assembly 12; and Fig. 5 is a schematic structural view of the battery core assembly 10 shown in Fig. 4, from which an spacer ring 13 is removed. Referring to Figs. 4 and 5, the electrode core assembly 12 includes an electrode core assembly body 123 and two electrode lead-out members 122 of opposite polarities electrically connected to the electrode core assembly body 123. One of the two electrode lead-out members 122 is a positive electrode lead-out member, and the other is a negative electrode lead-out member. The electrode core assembly body 123 includes at least two electrode cores 121 connected in parallel, where the length of the electrode core 121 extends along a first direction L, and the thickness of the electrode core 121 extends along a second direction W. The at least two electrode cores 121 are arranged in sequence along the second direction W, and each of the electrode cores 121 includes an electrode core body 1211 and two tabs 1213 of opposite polarities that are electrically connected to the electrode core body 1211. The two tabs 1213 are respectively arranged at two opposite sides of the electrode core 121 in the first direction L. One of the two tabs 1213 of the electrode core 121 is a positive electrode tab, and the other is a negative electrode tab. The electrode core assembly body 123 further includes a tab support 124 arranged between two adjacent tabs 1213 at the same side and electrically connected to the two adjacent tabs 1213. The two electrode lead-out members 122 are respectively electrically connected to one of the tab supports 124 located two sides of the electrode core assembly body 123 in the first direction, that is, the two adjacent tabs 1213 at the same side are electrically connected by the tab support 124. As shown in Fig. 3, a tab support 124 is provided at both sides of the electrode core assembly 12 in the length direction.

Therefore, in the present disclosure, two adjacent tabs 1213 at the same side can not only be electrically connected by the tab support 124, but also supported by the tab support 124, to effectively prevent the deformation of the tabs 1213 during the welding and use, and prolong the service life of the battery 100.

Each of the electrode lead-out members 122 of the electrode core assembly 12 is electrically connected to one of the tab supports 124 located at one side of the electrode core assembly body 123 in the first direction L. It can be understood that when the electrode core assembly 12 includes three, four or even more electrode cores 121, multiple tab supports 124 will be provided at each side of the electrode core assembly 12 in the length direction. In the embodiment of present disclosure, the positive electrode lead-out member 122 of the electrode core assembly 12 is located at the same side of the electrode core assembly 12 with the positive electrode tab 1213, and electrically connected to the positive electrode tab 1213; and the negative electrode lead-out member 122 is located at the other side of the electrode core assembly 12 with the negative electrode tab 1213, and electrically connected to the negative electrode tab 1213. According to some embodiments of the present disclosure, the electrode lead-out member 122 is electrically connected by one tab support 124 located the same side, so as to be electrically connected to a corresponding tab 1213.

For example, in the embodiment shown in Fig. 3 to Fig. 6, the electrode core assembly 12 includes two electrode cores 121. In this case, one tab support 124 is respectively provided at two opposite sides of the electrode core assembly 12 in the length direction L. The tab support 124 at each side is located between two tabs 1213 at the same side, and electrically connected to the two tabs 1213 at the same side.

It can be understood that in some embodiments of the present disclosure, when two or more tab supports 124 are provided at the same side of the electrode cores 121, since two adjacent tab supports 124 at the same side are spaced apart by the tab 1213, for the purpose of electrically connecting the two adjacent tab supports 124, the tab support 124 needs to be provided with a convex edge extending along the first direction L to beyond the edge of the tab 1213 to electrically connect the adjacent two tab supports 124 through contact of the convex edges.

In some embodiments of the present disclosure, referring to Figs. 5 to 8, the tab support 124 is connected to the electrode lead-out member 122 and the tab 1213 at positions that are respectively located on different surfaces of the tab support 124. Namely, the electrode lead-out member 122 and the tab 1213 that are electrically connected to the same tab support 124 are connected to the tab support 124 at positions respectively located on different surfaces of the tab support 124. Therefore, a situation is avoided where the electrode lead-out member 122 and the tab 1213 are both superimposed on the same surface of the tab support 124, to reduce the thickness at positions where the tab support 124 is connected to the electrode lead-out member 122 or the tab 1213.

In some embodiments of the present disclosure, the electrode lead-out member 122 includes a contact portion 1221 and a lead-out portion 1223. The contact portion 1221 is directly electrically connected to the tab support 124. The lead-out portion 1223 is drawn from the contact portion 1221 and extends along the first direction L. A part of the contact portion 1221 attached to the tab support 124 is plate-like, to increase the contact area between the contact portion 1221 and the tab support 124. Therefore, the welded area between the tab support 124 and the contact portion 1221 is increased, to improve the connection reliability. In this embodiment, the lead-out portion 1223 is connected to one side of the contact portion 1221 in the first direction L to form an L-shaped bracket. It can be understood that in other embodiments, the lead-out portion 1223 is connected to a middle portion of the contact portion 1221 in the first direction L to form an L-shaped bracket. The contact portion 1221 of the electrode lead-out member 122 and the tab support 124 can be electrically connected by welding.

In some embodiments of the present disclosure, the tab support 124 includes two opposite first surfaces 1241, where the two first surfaces 1241 face two adjacent tabs 1213 with the same polarity respectively, and the two adjacent tabs 1213 with the same polarity are respectively directly attached to the two first surfaces 1241 of the tab support 124. The tab 1213 and the tab support 124 can be electrically connected by welding. By fixedly attaching the tab 1213 to the first surface 1241 of the tab support 124, the tab 1213 can be prevented from moving or shifting.

In some embodiments of the present disclosure, at least one tab support 124 connected to the electrode lead-out member 122 is a square piece, that is, the cross-section of the tab support 124 is of a square shape, and the tab support 124 has a cube structure on the whole. It can be understood that all the tab support 124 can be arranged as a square piece in the present disclosure. The arrangement of the tab support 124 as a square piece can provide a better support ability for the tabs 1213 between the adjacent tabs 1213, which can prevent the deformation of the tab support 124 during the welding process especially when the tab 1213 is welded to the tab support 124, and increase the compression resistance of the tab support 124.

In some embodiments of the present disclosure, the square piece includes the two first surfaces 1241, a third surface 1243 located between the two first surfaces 1241 and facing the electrode core body 1211, and a fourth surface 1244 opposite to the third surface 1243.

The tab support 124 electrically connected to the electrode lead-out member 122 is connected to the electrode lead-out member 122 through the fourth surface 1244. Specifically, the contact portion 1221 of the electrode lead-out member 122 is connected to the fourth surface 1244 of the tab support 124. Two adjacent tabs 1213 are respectively connected to the two first surfaces 1241. That is, the electrode lead-out member 122 and the tab 1213 are both in direct contact with and connected to the tab support 124 at positions located on different surfaces of the tab support 124. Therefore, a situation is avoided where the electrode lead-out member 122 and the tab 1213 are both superimposed on the same surface of the tab support 124, to reduce the thickness at positions where the tab support 124 is connected to the electrode lead-out member 122 and the tab 1213, and facilitate the connection between the electrode lead-out member 122 and the tab support 124.

In some embodiments of the present disclosure, the interior of at least one tab support 124 is a hollow cavity 1240. For example, the interior of all the tab supports 124 can be arranged to have a hollow cavity 1240. The arrangement of the hollow tab support 124 can reduce the weight while ensuring the support strength.

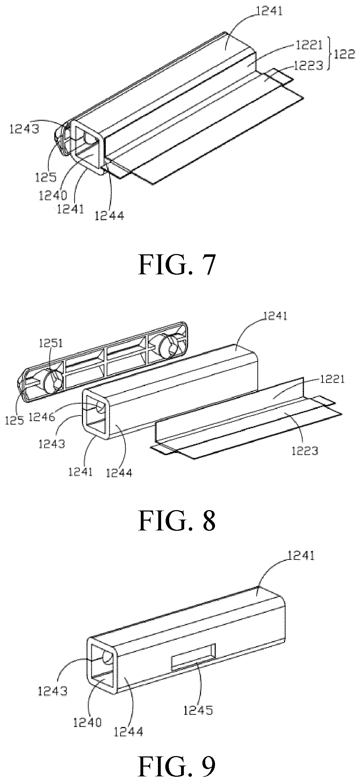

In some embodiments of the present disclosure, the hollow cavity 1240 is provided with an opening in at least one cavity wall. As shown in Figs. 7 and 8, the hollow cavity 1240 can be provided with an opening on two end faces, where the opening communicates with the electrode lead-out hole 131 on the spacer ring 13 located at the same side with the tab support 124, such that the hollow cavity 1240 is formed into a first liquid reservoir. As shown in Fig. 6, the electrode core assembly 12 is provided with an spacer ring 13 at two opposite sides in the first direction L. The two electrode lead-out member 122 of the electrode core assembly 12 are arranged at two opposite sides of the electrode core assembly 12 in the first direction L, and led out from the electrode lead-out holes 131 of spacer rings 13 at respective sides. By bringing the tab support 124 into communication with the electrode lead-out hole 131 on the spacer ring 13 at the same side, an electrolyte solution can enter via the electrode lead-out hole 131 into the hollow cavity 1240 communicating therewith, when the electrolyte solution is injected into the encapsulation film 11. Accordingly, the hollow cavity 1240 can be used to store the electrolyte solution, to attain a liquid storage function.

In some other embodiments, referring to Figs. 9, an opening 1245 may be provided on a cavity wall of the tab support 124 where the fourth surface 1244 is positioned, and the opening 1245 communicates with the electrode lead-out hole 131 on the spacer ring 13 at the same side, such that the hollow cavity 1240 is formed into a first liquid reservoir. The arrangement of an opening 1245 communicating with the electrode lead-out hole 131 on a cavity wall where the fourth surface 1244 is positioned can further facilitate the flow of the electrolyte solution in and out of the hollow cavity 1240. Therefore, the liquid storage space is increased by the first liquid reservoir.

In some embodiments of the present disclosure, an electrolyte solution is injected in the accommodating cavity 110, and it can be understood that after injection into the accommodating cavity 110, the electrolyte solution is filled in a space between an inner surface of the encapsulation film 11 and an outer surface of the electrode core assembly 12. The spacer ring 13 is provided with at least one second liquid reservoir 132, where the second liquid reservoir 132 is recessed from an outer surface of the spacer ring 13 to the interior of the spacer ring 13; and the second liquid reservoir 132 communicates with the accommodating cavity 110. As such, when the electrolyte solution is injected into the accommodating cavity 110, the electrolyte solution can enter the second liquid reservoir 132, to additionally store the electrolyte solution by using the second liquid reservoir 132.

The content of the electrolyte solution in the battery is an important factor affecting the service life of the battery. However, during the use of the battery, the electrolyte solution will gradually decrease due to expansion and other factors, affecting the service life of the battery. Moreover, lithium plating may also occur in some areas of the batteries, reducing the safety of the battery.

In the embodiment of present disclosure, the spacer ring 13 is provided with the second liquid reservoir 132. When an electrolyte solution is injected into the encapsulation film 11, the second liquid reservoir 132 can store an amount of the electrolyte solution, to reduce the possibility of withdrawing free electrolyte solution during an evacuation process when the encapsulation film 11 is evacuated in the formation of the battery core, and maximize the amount of the electrolyte solution stored. Further, during long-term use of the battery, the electrolyte solution in the battery core assembly 10 can be replenished in time, to reduce the occurrence of lithium plating in the battery, and improve the cycle life of the battery.

In some embodiments of the present disclosure, the spacer ring 13 and the encapsulation film 11 are not hermetically connected, to allow the first liquid reservoir 132 to communicate with the accommodating cavity 110. Namely, the spacer ring 13 is arranged in the encapsulation film 11, but an outer peripheral surface of the spacer ring 13 and an inner surface of the encapsulation film 11 are not hermetically connected. Therefore, when an electrolyte solution is injected into the accommodating cavity 110 defined by the encapsulation film 11, the electrolyte solution can enter the second liquid reservoir 132, so the second liquid reservoir 132 can store an amount of the electrolyte solution.

In some embodiments of the present disclosure, multiple reinforcing ribs 1321 are provided in the second liquid reservoir 132, to divide the second liquid reservoir 132 into multiple liquid storage units 1322. In this embodiment, three reinforcing ribs 1321 are provided. The three reinforcing ribs 1321 divide the second liquid reservoir 132 into four liquid storage units 1322. It can be understood that in other embodiments, the number of the reinforcing rib 1321 is not limited to 3, and may be 1, 2, 4, or 5. The number of the liquid storage unit 1322 may be, but is not limited to, 4, and may also be less than 4 or more than 4.

Therefore, by arranging the reinforcing rib 1321 in the second liquid reservoir 132, the overall strength of the spacer ring 13 can be enhanced, to enable the spacer ring 13 to have a higher overall compressive strength.

Optionally, in some embodiments of the present disclosure, the width of the four liquid storage units 1322 may be the same, or different.

Therefore, the width of each liquid storage unit 1322 can be adjusted according to the arrangement between opening 130 and the liquid storage unit 1322, to make the overall arrangement more reasonable.

Optionally, in some embodiments of the present disclosure, to flow the electrolyte solution in each liquid storage unit 1322 to the accommodating cavity 110, each liquid storage unit 1322 is provided with an opening 130, which facilitates the flow of the electrolyte solution from the liquid storage unit 1322.

Optionally, in some embodiments of the present disclosure, the opening 130 brings the liquid storage unit 1322 and the electrode lead-out hole 131 into communication.

Therefore, the electrolyte solution in the liquid storage unit 1322 is allowed to easily flow out of the liquid storage unit 1322 and into the accommodating cavity 110.

In some embodiments of the present disclosure, multiple second liquid reservoirs 132 are provided, and the multiple second liquid reservoirs 132 are arranged along the second direction W

In this embodiment, two second liquid reservoirs 132 are provided, and the two second liquid reservoirs 132 are arranged along the second direction W, symmetrically at two opposite sides of the electrode lead-out hole 131.

It can be understood that in some embodiments of the present disclosure, the number of the second liquid reservoir 132 may be three or more, which is not limited herein.

Therefore, the space on the spacer ring 13 is fully utilized. More second liquid reservoirs 132 are provided while the strength of the spacer ring 13 is ensured, so more electrolyte solution can be stored, to reduce the occurrence of lithium plating in the battery, and improve the cycle life of the battery 100.

In some embodiments of the present disclosure, referring to Fig. 3, 6, 7 and 8 again, an insulating spacer 125 is provided between the tab support 124 and the electrode core body 1211. The insulating spacer 125 functions to electrically isolate the electrode core 121 and the tab support 124.

In some embodiments of the present disclosure, the two opposite ends of the electrode core body 1211 in the first direction L are V-shaped end faces with a tip protruding outward, the two tabs 1213 of each of the electrode cores are respectively located at the tips of the two V-shaped end faces, and a V-shaped space is formed between the V-shaped end faces of the two adjacent electrode core bodies 1211 at the same end in the first direction L. The insulating spacer 125 is a V-shaped piece matching the shape of the V-shaped space, and the V-shaped piece is fitted in the V-shaped area. That is, the outer surfaces of the V-shaped sides of the insulating spacer 125 are respectively attached to the two V-shaped end faces forming the V-shaped space, to isolate the electrode core body 1211 and the tab support 124, and support the V-shaped end faces of the electrode core body 1211, thereby protecting the electrode core 12 against deformation due to collision.

In some embodiments of the present disclosure, the V angle of the V-shaped space is 90-150 degrees. According to some embodiments of the present disclosure, for example, the V angle may for example be in the range of 100-120 degrees, or 120-145 degrees, and may be 95 degrees, 110 degrees or 125 degrees in some embodiments, which is not limited herein.

Definitely, in some other embodiments, the two opposite ends of the electrode core body 1211 in the first direction L can also be straight, square, or arc-shaped. Correspondingly, the shape of the insulating spacer 125 also needs to be adaptively adjusted for adaptation, which is not limited herein.

In some embodiments of the present disclosure, the insulating spacer 125 is fixed to the tab support 124 by snap fit. In some embodiments, referring to Figs. 8, a buckle 1251 is provided on the insulating member 125, and an engaging hole 1246 is provided on the third surface 1243 of the tab support 124. The buckle 1251 is snapped into the engaging hole 1246 by extrusion deformation to form snap connection. Two buckles 1251 are provided, and two engaging holes 1246 are provided, where the two buckles 1251 are snapped into the two engaging holes 1246 to form snap connection. Therefore, firm connection is formed between the insulating member 125 and the tab support 124.

It should be noted that the insulating spacer 125 and the tab support 124 may only be in contact with each other without being fixed by a fastener, or they can be fixed in a manner of being pressed against each other through reasonable spatial arrangement. Furthermore, the insulating spacer 125 and the tab support 124 can also be glued together, or fixed together in other ways, which is not limited herein.

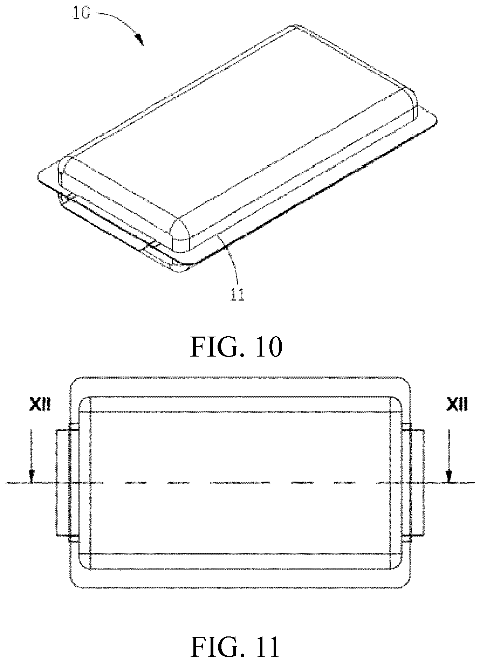

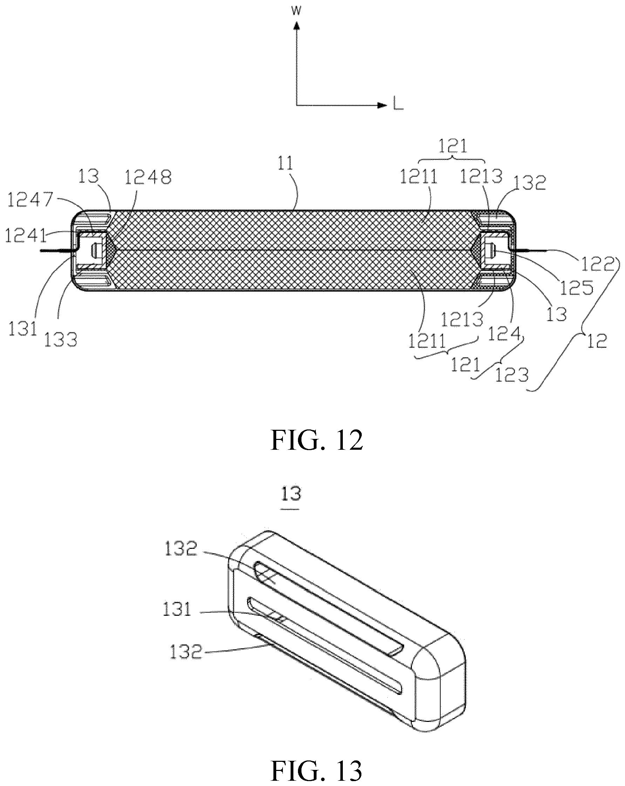

Fig. 10 is a schematic structural perspective view of a battery core assembly 10 provided in a second embodiment; Fig. 11 is a front view of the battery core assembly 10 provided in the second embodiment; and Fig. 12 is a schematic cross-sectional view of the battery core assembly 10 provided in the second embodiment along XII-XII. The second embodiment differs from the first embodiment in that the tab support 124 is a U-shaped piece, and the opening of the U-shaped piece is oriented parallel to the first direction L. The U-shaped piece includes two opposite side walls 1247 and a bottom wall 1248 between the two opposite side walls 1247, and the outer surfaces of the two opposite side walls 1247 are the two first surfaces 1241 respectively. Namely, adjacent two tabs 1213 are respectively attached to the outer surfaces of the two opposite side walls 1247.

In some embodiments of the present disclosure, referring to Figs. 3 to 6, the electrode core assembly 12 is arranged in an accommodating cavity 110 defined by the encapsulation film 11, and the electrode core assembly 12 further includes an spacer ring 13 arranged in the accommodating cavity 110. The spacer ring 13 is arranged at a side of the electrode core assembly provided with the electrode lead-out member 122, and provided with an electrode lead-out hole 131 penetrating through the spacer ring 13 for leading the electrode lead-out member 122 out. The electrode lead-out member 122 is extended out of the electrode lead-out hole 131, to fix the electrode lead-out member 122 with the aid of the spacer ring 13. This can prevent the wobbling of the electrode lead-out member 122 to a certain extent, thus improving the firmness of the electrode lead-out member 122, and extending the service life of the battery core assembly 10.

As shown in Fig. 12, the opening of the U-shaped piece faces the spacer ring 13 at the same side, that is, the opening of the U-shaped piece is arranged to face away from the electrode core body 1211, and the tab support 124 electrically connected to the electrode lead-out member 122 is connected to the electrode lead-out member 122 through one of the side walls 1247. In some embodiments, the portion of the electrode lead-out member 122 for electrical connection with the tab support 124 is located between one of the tabs 1213 and a corresponding side wall 1247. That is, the electrode lead-out member 122 and one tab 1213 are stacked on and welded to the outer surface of one of the side walls 1247.

The opening of the U-shaped piece communicates with the electrode lead-out hole 131 on the spacer ring 13 at the same side, such that an inner cavity 133 in the U-shaped piece is formed into a first liquid reservoir. Therefore, an auxiliary space for storing the electrolyte solution is further increased.

In some embodiments of the present disclosure, the opening of the U-shaped piece faces the electrode core body 1211, and the tab support 124 electrically connected to the electrode lead-out member 122 is connected to the electrode lead-out member 122 through the bottom wall 1248.

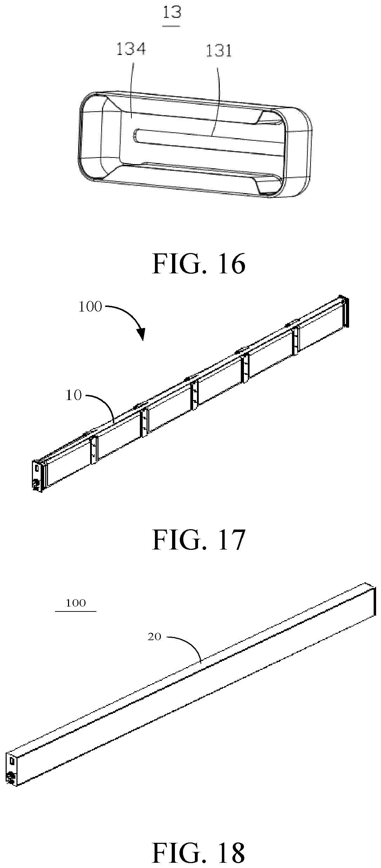

In some embodiments of the present disclosure, the spacer ring 13 is mounted around the electrode core assembly body 123, that is, the two spacer rings 13 are respectively mounted around two opposite sides of the electrode core assembly body 123 in the first direction L, as shown in Fig. 12. Referring to Figs. 13 and 16, the spacer ring 13 has an accommodating space 134 at a side facing the electrode core assembly body 123. The two spacer rings 13 are respectively mounted around two opposite sides of the electrode core assembly body 123 in the first direction L. The two opposite sides of the electrode core assembly body 123 in the first direction L are respectively fitted in the accommodating space 134 of a corresponding spacer ring 13.

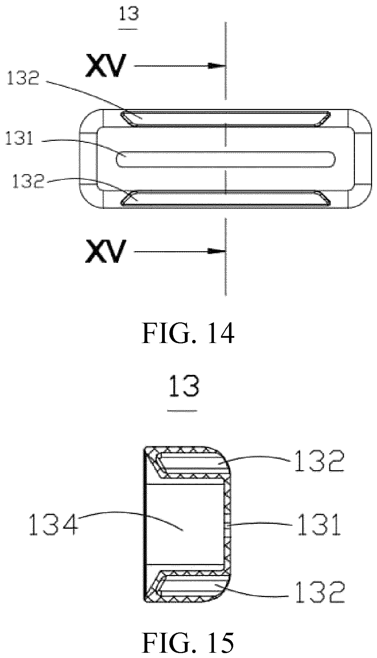

The second embodiment differs from the first embodiment in that no reinforcing ribs 1321 are arranged in the second liquid reservoir 132 as shown in Figs. 13, 14, 15 and 16. Namely, the second liquid reservoir 132 includes only one liquid storage unit 1322. Two second liquid reservoirs 132 are provided, and the two second liquid reservoirs 132 are arranged along the second direction W symmetrically at two opposite sides of the electrode lead-out hole 131.

It can be understood that in some embodiments of the present disclosure, the number of the second liquid reservoir 132 may be three or more, which is not limited herein.

Therefore, the space on the spacer ring 13 is fully utilized, such that the spacer ring 13 can store more electrolyte solution, to reduce the occurrence of lithium plating in the battery, improve the cycle life of the battery 100, and simplify the structure.

Referring to Figs. 17 and 18, in an embodiment of the battery 100 provided in the present disclosure, the battery 100 includes a casing 20 and at least one battery core assembly 10 packaged in the casing 20. As shown in Fig. 17, multiple battery core assemblies 10 are encapsulated in the casing 20, and the multiple battery core assemblies 10 are arranged in sequence along a length direction of the battery 100. When the multiple battery core assemblies 10 are connected in series, the positive electrode lead-out member of one battery core assembly 10 of two battery core assemblies 10 is electrically connected to the negative electrode lead-out member of the other battery core assembly 10, to connect the two battery core assemblies 10 in series. The battery core assembly 10 is a battery core assembly 10 as described in any of the foregoing embodiments.

In some embodiments of the present disclosure, the casing 20 is a metal casing, for example, aluminum casing. Definitely, it may be formed of other metals as required.

In some embodiments of the present disclosure, the battery 100 is generally a cuboid, and has a length L, a thickness W and a height H, where the length L is greater than the height H, and the height H is greater than the thickness W. The length of the battery 100 is 400-2500 mm, and the length to height ratio of the battery 100 is 4-21.

It should be noted that the battery 100 being roughly a cuboid means that the battery 100 has a cuboid shape, a cube shape, a roughly cuboid shape or cube shape that is locally irregular, a generally approximate cuboid shape or cube shape that has locally a notch, a bump, a chamfer, an arc portion, or a curved portion.

The present disclosure further provides a battery module, which includes multiple batteries 100 provided in the present disclosure.

The present disclosure further provides a battery pack 200, which includes multiple batteries 100 provided in the present disclosure or multiple battery modules provided in the present disclosure.

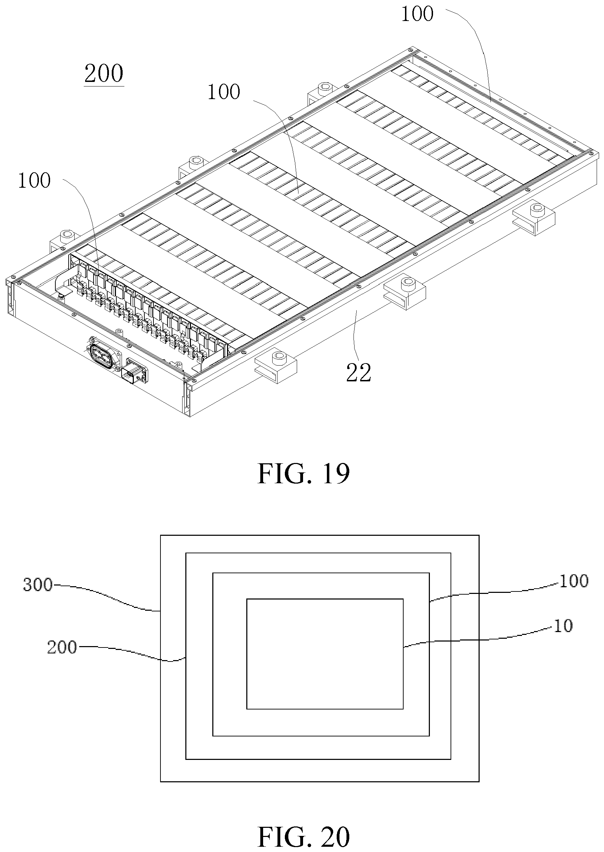

Referring to Fig. 19, the battery pack 200 provided in the present disclosure includes a tray 22 and the batteries 100 arranged on the tray 22.

The present disclosure further provides a vehicle 300 (see Fig. 20), which includes a battery module or a battery pack 200 provided in the present disclosure.

Generally, the number of serially connected electrode core assemblies 12 depends on the output voltage of each electrode core assembly 12, the width of the battery pack 200 and the overall voltage requirement of the battery pack 200. For example, a type of vehicle requires an output voltage of a battery system of 300 V, and the voltage of a traditional iron-lithium battery is 3.2V In related art, 100 batteries need to be connected in series in a pack to meet the requirement. In contrast, in the battery pack 200 provided in the present disclosure, assuming that 2 electrode core assemblies 2 are serially connected in one battery core assembly 10, then only 50 battery core assemblies 10 need to be arranged. This greatly reduces the design of the entire pack and the arrangement of the batteries 100, thus making efficient use of the space, and improving the space utilization.

From the above, it can be seen that the present disclosure has excellent characteristics mentioned above, and has practical use due to the presence of performances that are not found in related art, making the product of the present disclosure become a product of great practical value.

The foregoing descriptions are merely examples of embodiments of the present disclosure, but are not intended to limit the present disclosure. Any modification, equivalent replacement, and improvement made without departing from the idea and principle of the present disclosure shall fall within the protection scope of the present disclosure.

## Claims

1. A battery core assembly, comprising an encapsulation film and an electrode core assembly encapsulated in the encapsulation film, wherein the electrode core assembly comprises an electrode core assembly body and two electrode lead-out members of opposite polarities electrically connected to the electrode core assembly body, and the electrode core assembly body comprises at least two electrode cores connected in parallel;
the length of the electrode core extends along a first direction, the thickness of the electrode core extends along a second direction, the at least two electrode cores are arranged in sequence along the second direction, each of the electrode cores comprises an electrode core body and two tabs of opposite polarities that are electrically connected to the electrode core body, and the two tabs are respectively arranged at two opposite sides of the electrode core in the first direction;
the electrode core assembly body further comprises a tab support arranged between two adjacent tabs at the same side and electrically connected to the two adjacent tabs; and the two electrode lead-out members are respectively electrically connected to one of the tab supports located at two sides of the electrode core assembly body in the first direction.

2. The battery core assembly according to claim 1, wherein the tab support is connected to the electrode lead-out member and the tab at positions that are respectively located on different surfaces of the tab support.

3. The battery core assembly according to claim 1 or 2, wherein the tab support comprises two opposite first surfaces, wherein the two first surfaces face two adjacent tabs with the same polarity respectively, and the two adjacent tabs with the same polarity are respectively directly attached to the two first surfaces of the tab support.

4. The battery core assembly according to claim 3, wherein at least one tab support connected with the electrode lead-out member is a square piece; the square piece comprises the two first surfaces, a third surface located between the two first surfaces and facing the electrode core body, and a fourth surface opposite to the third surface; and
the tab support electrically connected to the electrode lead-out member is connected to the electrode lead-out member through the fourth surface.

5. The battery core assembly according to any one of claims 1 to 4, wherein at least one tab support is a U-shaped piece, wherein the opening of the U-shaped piece is oriented parallel to the first direction, the U-shaped piece comprises two opposite side walls and a bottom wall between the two opposite side walls, and the outer surfaces of the two opposite side walls are the two first surfaces respectively.

6. The battery core assembly according to claim 5, wherein the opening of the U-shaped piece faces the electrode core body, and the tab support electrically connected to the electrode lead-out member is connected to the electrode lead-out member through the bottom wall.

7. The battery core assembly according to claim 5, wherein the electrode core assembly is arranged in an accommodating cavity defined by the encapsulation film; an spacer ring is further arranged in the accommodating cavity at a side of the electrode core assembly provided with the electrode lead-out member, and provided with an electrode lead-out hole for leading the electrode lead-out member out; the opening of the U-shaped piece faces the spacer ring at the same side; and the tab support electrically connected to the electrode lead-out member is connected to the electrode lead-out member through one of the side walls.

8. The battery core assembly according to any one of claims 1 to 7, wherein an insulating spacer is provided between the tab support and the electrode core body.

9. The battery core assembly according to claim 8, wherein the two opposite ends of the electrode core body in the first direction are V-shaped end faces with a tip protruding outward, the two tabs of each of the electrode cores are respectively located at the tips of the two V-shaped end faces, and a V-shaped space is formed between the V-shaped end faces of two adjacent electrode core bodies at the same end in the first direction; and
the insulating spacer is a V-shaped piece matching the shape of the V-shaped space, and the V-shaped piece is fitted in the V-shaped area.

10. The battery core assembly according to claim 9, wherein the V angle of the V-shaped space is 90-150 degrees.

11. The battery core assembly according to claim 8, wherein the insulating spacer is fixed to the tab support by snap fit.

12. The battery core assembly according to any one of claims 1 to 11, wherein the electrode core assembly is arranged in an accommodating cavity defined by the encapsulation film; and an spacer ring is further arranged in the accommodating cavity at a side of the electrode core assembly provided with the electrode lead-out member, and provided with an electrode lead-out hole for leading the electrode lead-out member out.

13. The battery core assembly according to claim 12, wherein the interior of at least one tab support is a hollow cavity, and the hollow cavity is provided with an opening in at least one cavity wall, to communicate with the electrode lead-out hole on the spacer ring at the same side, such that the hollow cavity is formed into a first liquid reservoir.

14. The battery core assembly according to claim 12, wherein an electrolyte solution is injected in the accommodating cavity, and the spacer ring is provided with at least one second liquid reservoir, wherein the second liquid reservoir is recessed from an outer surface of the spacer ring to the interior of the spacer ring; and the second liquid reservoir communicates with the accommodating cavity.

15. The battery core assembly according to claim 12, wherein the spacer ring has an accommodating space at the side facing the electrode core assembly body, the two spacer rings are respectively mounted around two opposite sides of the electrode core assembly body in the first direction, and the two opposite sides of the electrode core assembly body in the first direction are respectively fitted in the accommodating space of a corresponding spacer ring.

16. A battery, comprising a casing, and a plurality of battery core assemblies according to any one of claims 1 to 15 arranged in sequence and encapsulated in the casing, wherein the battery core assemblies are serially connected.

17. A battery pack, comprising a plurality of batteries according to claim 16.

18. A vehicle, comprising a battery according to claims 16 or a battery pack according to claim.
